Europäisches Patentamt

European Patent Office

Office européen des brevets

(11) Publication number: **0 132 463**
A1

## EUROPEAN PATENT APPLICATION

(21) Application number: 83201092.0

(22) Date of filing: 23.07.83

(51) Int. Cl.⁴: **B 60 G 17/00**
**B 60 G 21/10**

(43) Date of publication of application:
13.02.85 Bulletin 85/7

(84) Designated Contracting States:
AT BE CH DE FR GB IT LI LU SE

(71) Applicant: De Rotterdamsche Droogdok Maatschappij B.V.
Heyplaatstraat 4
NL-3089 RC Rotterdam(NL)

(72) Inventor: Klaassen, Lambertus Gerardus Maria
A.W. Lipsstraat 6
NL-3262 GA Oud Beijerland(NL)

(74) Representative: Noz, Franciscus Xaverius, Ir. et al,
Boschdijk 155 P.O. Box 645
NL-5600 AP Eindhoven(NL)

(54) Vehicle.

(57) A vehicle, for example, an excavator, an agricultural tractor or the like, comprising a frame (1) supported by at least two ground wheels (4) arranged on an axle (2) extending transversely of the direction of length of the vehicle, said axle (2) being capable of turning about a pivotal shaft (3) extending in the direction of length of the vehicle and being located near the middle of the axle, whilst the vehicle is provided with a brake system (22-29) for blocking the wheels (4) supporting the vehicle with the aid of a pressurized fluid, whereby on each side of the pivotal shaft (3), between the axle (2) and the frame (1) setting cylinders (5-6) are arranged, whose cylinder spaces are also closed with the aid of the pressurized fluid when the brake system is actuated.

FIG. I.

-1-

Vehicle.

The invention relates to a vehicle, for example, an excavator, an agricultural tractor or the like comprising a frame supported by at least two ground wheels arranged on an axle transverse of the direction of length of the vehicle, said axle being adapted to pivot about a pivotal shaft extending in the direction of length of the vehicle and being located near the middle of the axle.

In such vehicles, which are frequently used on uneven land, it is in particular the steerable front axle which is coupled with the tractor with the aid of a pivotal shaft so that the unevennesses of the ground can be matched.

During braking and/or operating with tools attached to the vehicle, for example, excavators or elevators or the like the vehicle should, during its standstill, be as stable as possible so that the frame of the vehicle cannot turn with respect to the ground wheels supporting the vehicle. This means that the wheel axle has to be guarded against a turn about the pivotal shaft.

According to the invention this can be achieved by arranging setting cylinders between the axle and the frame, one on each side of the pivotal shaft, the cylinder spaces also being closed by the pressurized fluid when the brake system is actuated.

The invention will be described more fully hereinafter with reference to an embodiment of the construction in accordance with the invention schematically shown in the accompanying drawing.

Fig. 1 is a schematic front view of an axle with the setting cylinders co-operating herewith.

Fig. 2 shows the diagram for the control of the setting cylinders.

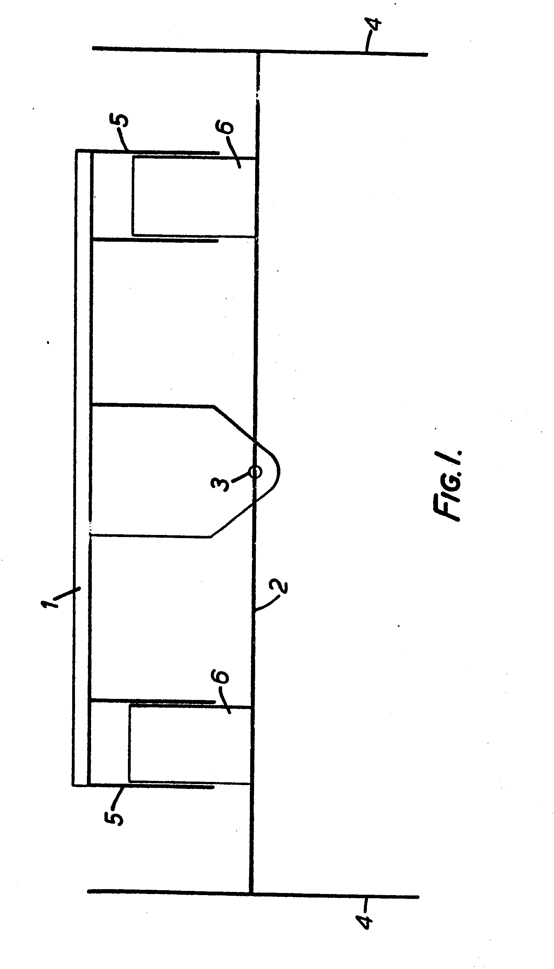

As is schematically shown in Fig. 1 the frame 1 of a vehicle, for example, an excavator, an agricultural tractor or the like has fastened to it a wheel axle 2 having near the middle a pivotal shaft 3 extending parallel to the direction of length of the vehicle. At the ends of the wheel axle 2 are arranged in a conventional manner the ground wheels 4 (shown only schematically). On each side of the pivotal shaft 3 single-action setting cylinders 5 are secured, the pistons 6 of which are bearing on the top side of the axle 2, as the case may be, with the interposition of members not shown in detail.

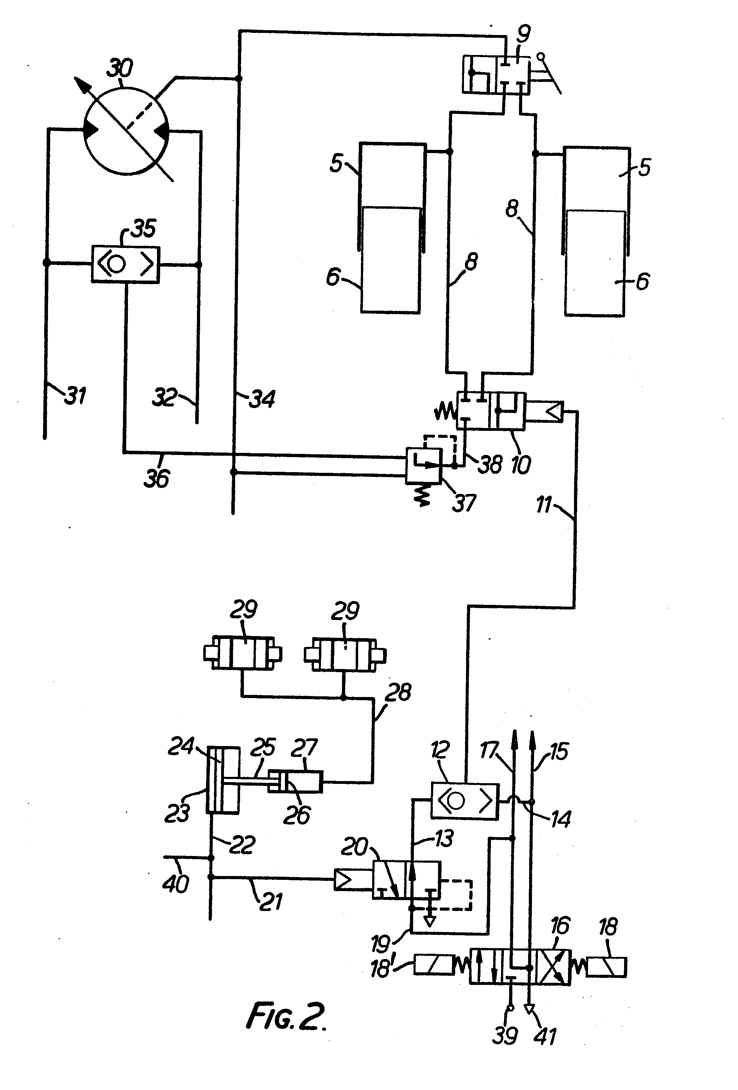

Fig. 2 schematically shows that ducts 8 are connected with the cylinder spaces of the setting cylinders 5. The two ducts are each connected at one end with a preferably manually operable valve 9 and at the other end with a pneumatically operable valve 10. This valve 10 is adjustable with the aid of a pressurized fluid which can be fed to the valve through a duct 11 connected with said valve.

The duct 11 is connected with an automatically changing-over valve 12 which allows pressurized fluid to pass to the duct 11 either through a duct 13 connected with said valve or through a duct 14 also connected with said valve in dependence of the fact through which of the two ducts 13 and 14 pressurized fluid is supplied. The change-over valve 12 is designed so that when the valve passes fluid from the duct 13 or the duct 14, the passage through the valve to the duct 14 or the duct 13 respectively is automatically closed. The duct 14 is connected with a duct 15, which communicates at one end with a three-position valve 16 and at the other end with a switching mechanism with the aid of which a transmission mechanism of the vehicle can be changed over between low speed and high speed. With said switching mechanism is connected a further duct 17 also communicating with the valve 16.

The valve 16 is adjustable with the aid of two solenoids 18 and 18'.

The duct 17 communicates through a duct 19 with a two-position valve 20, which can be changed over by means of pressurized fluid supplied through a duct 21 to the valve.

The duct 21 communicates through a duct 22 with the cylinder space of a setting cylinder 23 comprising a piston 24. The piston 24 is connected with the aid of a piston rod 25 with a piston 26 of a cylinder 27, the diameter of said piston being appreciably smaller than that of the piston 24. The cylinder space of the cylinder 27 communicates through a duct 28 with two brake cylinders 29.

The vehicle is furthermore equipped with a hydraulically operating motor 30, to which, in dependence on the intended direction of rotation of the motor, pressurized fluid is fed from a pump through a duct 31 or 32 connected with the motor 30. With the pump is furthermore connected a return duct 34 communicating with a fluid reservoir 33. This return duct 34 is, as is shown in Fig. 2, also connected with the valve 9.

Between the ducts 31 and 32 is arranged an automatically operating change-over valve 35, which blocks the communication between the two ducts 30 and 32, but is invariably in a position such that a further duct 36 connected with said valve is always in communication with that duct through which pressurized fluid is fed to the pump. The duct 36 is connected through a pressure reducing valve 37 and a duct 38 with the valve 10.

Through a duct 39 connected with a port of the valve 16 pressurized fluid can be fed from a pressurized fluid source, preferably the reservoir containing pressurized fluid source, preferably the reservoir containing pressurized air for the brake system. This reservoir furthermore communicates through a duct 40 with the duct 22, the duct 40 including a brake valve.

A further port of the housing 16 constitutes an open outlet to the atmosphere.

When the three-position valve 16 is in the medium position shown in Fig. 2, no pressurized air will be fed to the valve 10 so that the valve 10 will be in the position shown in Fig. 2, in which the ends of the ducts 8 connected with said valve are closed. Normally the valve 9 is also in the position shown in Fig. 2 so that also the ends of the ducts 8 connected with said valve are closed. This means that the cylinder spaces of the cylinders 5 are closed and the fluid contained in said cylinders cannot be displaced. As a result the pistons 6 are blocked against displacement and hence the axle 2 is guarded against a turn about the shaft 3.

When the vehicle moves with high speed, the solenoid 18 is operative so that the three-position valve 16 is moved into a position such that pressurized air is fed from the duct 19 to the duct 15, whilst the duct 17 is in open communication with the atmosphere. Therefore, pressurized air will flow through the duct 14 and the change-over valve 12 to the valve 10, which is thus changed over to a position in which the ends of the ducts 8 connected with said valve are communicating with one another.

In the case of swinging of the axle variations in the volumes of the cylinders 5 may occur. This is compensated for by the inlet and/or outlet of fluid from the duct 36.

When the transmission mechanism of the vehicle is changed over to low speed, the solenoid 18' is energized so that the three-position valve 16 occupies a position such that pressurized air is fed into the duct 17, whereas the duct 15 is in open communication with the atmosphere. From the duct 17 the pressurized air can flow through the duct 19 and the valve 12 to the valve 10 so that the valve 10 is again moved into the position in which the ends of the ducts 8 connected with said valve are in open communication with the duct 38. Even under these operational conditions the axle 2 can turn about the shaft 3. When, however, the vehicle is braked during its low speed travel, for which purpose pressurized air is admitted to the duct 40, this air will flow into the cylinder 23 and displace the pistons 24 and 26 to the right so that the brake cylinders 29 are actuated to brake the wheels. Furthermore pressurized air will flow towards the valve 20, which is thus displaced from the position shown in the Figure to the right. Owing to this displacement of the valve the supply of pressurized air from the duct 19 through the duct 11 to the valve 10 is interrupted, whilst the duct 11 is brought through the valve 12, the duct 13 and the valve 20 into open communication with the atmosphere. Owing to the drop of pressure at the valve 10 the latter will move back into the position shown in Fig. 2 so that the communication between the ends of the ducts 8 and the duct 38 is interrupted. It will be obvious that fluid can no longer be displaced out of the setting cylinders 5 so that the axle 2 is automatically blocked against a tilt about the shaft 3 so that undesirable rocking movements of the vehicle during braking are avoided.

During digging operations the brake cylinders 29 will also be actuated so that in a similar manner as described above it is automatically ensured that during digging operations and the like the axle 2 can not turn with respect to the frame about the pivotal shaft 3.

If the vehicle has to be drawn, for example, because the driving engine is failing, the valve 9 can be moved into a position in which the ducts connected with the valve 9 are connected with the duct 34. In this position of the valve a free flow of fluid into and out of the cylinders 5 is again possible.

-1-

CLAIMS

1. A vehicle, for example, an excavator, an agricultural tractor or the like, comprising a frame supported by at least two ground wheels arranged on an axle extending transversely of the direction of length of the vehicle, said axle being capable of turning about a pivotal shaft extending in the direction of length of the vehicle and being located near the middle of the axle, whilst the vehicle is provided with a brake system for blocking the wheels supporting the vehicle with the aid of a pressurized fluid characterized in that on each side of the pivotal shaft, between the axle and the frame, setting cylinders are arranged, whose cylinder spaces are also closed with the aid of the pressurized fluid when the brake system is actuated.

2. A vehicle as claimed in Claim 1 characterized in that the two setting cylinders are connected with a two-position valve adjustable with the aid of the pressurized fluid, in a first position of which the setting cylinders are closed and in the second position of which the setting cylinders are coupled with one another.

3. A vehicle as claimed in Claim 2 characterized in that in the second position of the two-position valve the two setting cylinders are connected through a reducing valve with a duct of the driving system of the vehicle passing pressurized fluid.

4. A vehicle as claimed in Claim 2 or 3 characterized in that the two-position valve is connected through an automatically operating change-over valve with two ducts, one of which ducts passes the pressurized fluid, whilst said ducts can be brought through a three-way valve into connection with a source of pressurized air, the design being such that pressurized air is fed to one duct during high speed travel and to the other duct at a low speed travel.

5. A vehicle as claimed in Claim 4 characterized in that the duct to which pressurized fluid is fed during the low speed travel includes a two-position valve which is adjustable with the aid of the pressurized fluid actuating the brake system in a manner such that in a first position the two-position valve allows the fluid fed to the duct concerned to pass and in a second position, into which the valve is moved when the brake system is actuated, the valve interrupts the supply of pressurized fluid and establishes an open communication between the outlet duct connected with the valve and the atmosphere.

FIG. I.

0132463

0132463

FIG.2.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | GB-A-2 040 839 (KUBOTA) <br> * Whole document * | 1-3 | B 60 G 17/00 <br> B 60 G 21/10 |
| X | FR-A-1 050 830 (MIAG) <br> * Page 2, left-hand column, paragraph 4 - right-hand column, paragraph 1; page 2, right-hand column, last paragraph - page 3, left-hand column, paragraph 2; figures 1,2,6 * | 1,2 | |
| A | US-A-3 687 227 (REUTER) <br> * Column 2, lines 3-54; column 3, line 32 - column 5, line 18; figures 1-3 * | 1-3 | |
| A | US-A-4 152 000 (MEISEL) <br> * Column 1, line 55 - column 4, line 50; figures 1-3 * | 1,2 | **TECHNICAL FIELDS SEARCHED (Int. Cl. 3)** |
| E | NL-A-8 200 556 (ROTTERDAMSCHE DROOGDOK MIJ.) <br> * Whole document * | 1-5 | B 60 G <br> E 02 F <br> B 60 J <br> B 60 K 41/26 |
| A | GB-A-2 093 411 (KUBOTA) | | |
| A | DE-A-2 926 326 (VW) | | |
| | --- -/- | | |

The present search report has been drawn up for all claims

| Place of search <br> THE HAGUE | Date of completion of the search <br> 20-03-1984 | Examiner <br> ESPEEL R.P. |
|---|---|---|

## DOCUMENTS CONSIDERED TO BE RELEVANT

Page 2

| Category | Citation of document with indication, where appropriate, of relevant passages | Relevant to claim | CLASSIFICATION OF THE APPLICATION (Int. Cl. ³) |
|---|---|---|---|
| A | DE-U-1 795 098 (LOCHNER) | | |
| A | FR-A-2 044 297 (POCLAIN) | | |
| A | US-A-3 953 040 (UNRUH) | | |
| A | US-A-3 774 935 (ALDRICH) | | |

TECHNICAL FIELDS SEARCHED (Int. Cl. ³)

The present search report has been drawn up for all claims

| Place of search THE HAGUE | Date of completion of the search 20-03-1984 | Examiner ESPEEL R.P. |
|---|---|---|